# EUROPEAN PATENT SPECIFICATION

(11) **EP 3 102 074 B1**
(45) Date of publication and mention of the grant of the patent: **12.06.2019**
(21) Application number: 15703916.5
(22) Date of filing: 30.01.2015
(51) Int. Cl.: A47J 31/06, A47J 31/52

(54) **A HOT BEVERAGE PREPARATION MACHINE COMPRISING AN OPTICAL DETECTION MECHANISM**
HEISSGETRÄNKZUBEREITUNGSMASCHINE MIT EINEM OPTISCHEN DETEKTIONSMECHANISMUS
MACHINE DE PRÉPARATION DE BOISSON CHAUDE COMPORTANT UN MÉCANISME DE DÉTECTION OPTIQUE

(30) Priority: 05.02.2014 TR 201401329
(43) Date of publication of application: 14.12.2016
(73) Proprietor: Arçelik Anonim Sirketi, 34950 Istanbul (TR)
(72) Inventor: KUYUMCU, Yusuf, 34950 Istanbul (TR); HATIPOGLU, Oner, 34950 Istanbul (TR); TEZEL, Yagiz, 34950 Istanbul (TR); OZTURK, Erkan, 34950 Istanbul (TR)
(86) International application number: PCT/EP2015/051937
(87) International publication number: WO 2015/117897

(56) References cited:
- EP-A1- 2 005 865
- JP-A- H10 137 123
- JP-A- 2000 070 140

## Description

The present invention relates to a hot beverage preparation machine comprising an optical detection mechanism.

In hot beverage preparation machines, the water filled into the water container is heated by a water heater and is transferred to the brewing chamber containing the raw material of the beverage to be prepared. The brewing process is performed in the brewing chamber as a result of the interaction between the raw beverage material and water. The brewed beverage is afterwards transferred into a pot and served. The time duration the raw beverage material interacts with the water is one of the important parameters that defines the brew strength, hence the taste of the beverage. Keeping the raw beverage material for a long time in the brewing chamber causes the preponderance of taste of the raw beverage material to increase and the beverage to get bitter. On the other hand, keeping the raw beverage material in the brewing chamber for a time period shorter than a certain time causes a weed-like smell in the beverage and an undesired raw taste.

In the state of the art International Patent Application No. WO2008049163, a tea maker is disclosed, wherein the pulp of the used beverage material is removed from the brewing chamber.

In the state of the art Japanese Patent Application No. JPH10137123, a tea maker is disclosed, wherein the permeated light density is used to determine the tea quality.

In the state of the art Japanese Patent Application No. JP2000070140, a tea maker is disclosed, wherein tea maker enables keeping of the taste of extracted tea beverage uniform while maintaining better quality as tea beverage at a lower cost.

In the state of the art European Application No. EP2005865, a beverage maker is disclosed, wherein the coffee or tea maker automatically heats the water, supplies the water into the operation cup (30) to make coffee or tea and stores the coffee or tea in the thermal carafe (40) without extra help from the users.

The aim of the present invention is the realization of a hot beverage preparation machine that improves the taste quality of the hot beverage and provides ease of utilization.

The hot beverage preparation machine realized in order to attain the aim of the present invention and explicated in the claims, comprises a water container wherein the brewing water is heated, a brewing chamber wherein the brewing process is performed as a result of the interaction between the raw beverage material and water, and a pot that is situated under the brewing chamber so as to allow the brewed beverage to be distilled therein.

The hot beverage preparation machine of the present invention comprises an optical detection mechanism that is disposed above the brewing chamber and that has a transmitter which is a light source and a receiver that measures the intensity of the light which is emitted from the transmitter and is reflected from the surface of the hot beverage. The hot beverage preparation machine furthermore comprises a control unit that detects the surface roughness of the beverage inside the brewing chamber depending on the light intensity value measured by the optical detection mechanism. Since the light intersecting with the surface will show tendency of straight reflection if the beverage surface roughness is low, the reflection coefficient of light will increase and the brewing process will be ended by the control unit by detecting that the brewing is accomplished. The transmitter and the receiver are placed in a staggered manner such that a distance remains therebetween. Thus, the light waves emitted from the transmitter are prevented from reaching the receiver without contacting the beverage surface and the measurement precision of the receiver is increased.

According to the present invention, the receiver is disposed on the cover. The receiver does not operate when the cover is opened or forgotten to be closed and the control unit stops the hot beverage preparation machine. Thus, taste quality of tea is increased by preventing realization of the brewing process while the cover is open.

According to the present invention, the control unit compares the light intensity value measured by the optical detection mechanism with the light intensity value predetermined by the manufacturer and controls whether or not there is beverage in the brewing chamber.

In an embodiment of the present invention, the receiver of the optical detection mechanism is a photoelectric sensor or a phototransistor sensor.

In an embodiment of the present invention, the transmitter of the optical detection mechanism is an infrared sensor or an ultraviolet light source. Thus, the brewing process is executed without alerting the user visually by means of the transmitter emitting light in the invisible wavelength.

In an embodiment of the present invention, the transmitter is a light emitting diode (LED). Thus, the light emitted inside the brewing chamber during the brewing process is seen by the user and the user understands that the brewing process has started.

The hot beverage preparation machine realized in order to attain the aim of the present invention is illustrated in the attached figures, where:

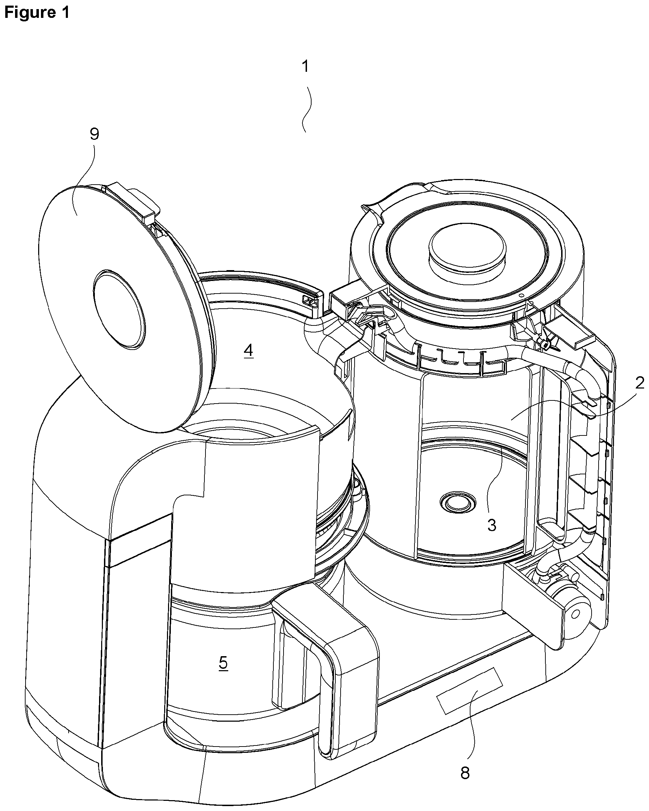

Figure 1 - is the perspective view of a hot beverage preparation machine.

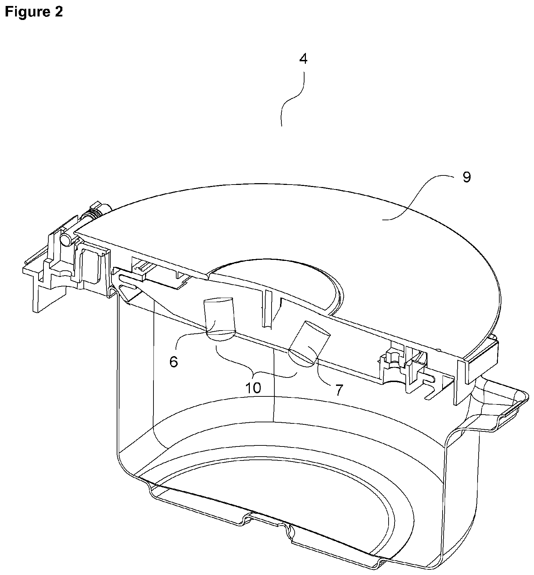

Figure 2 - is the partial cross-sectional view of the brewing chamber in an embodiment of the present invention.

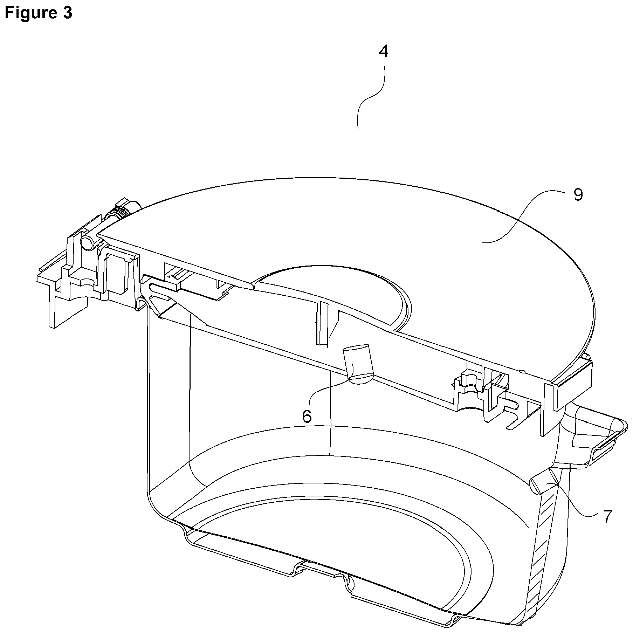

Figure 3 - is the partial cross-sectional view of the brewing chamber in another embodiment of the present invention.

The following symbols are used for explicating the hot beverage preparation machine (1) of the present invention:
(LI) : The intensity of light reflecting from the hot beverage surface inside the brewing chamber (4) to the receiver (7)
(LIₘ) : The light intensity value measured by the optical detection mechanism (10)
(LI_{d}) : A lower light intensity value predetermined by the manufacturer

The elements illustrated in the figures are numbered as follows:
1. Hot beverage preparation machine
2. Water container
3. Heater
4. Brewing chamber
5. Pot
6. Transmitter
7. Receiver
8. Control unit
9. Cover
10. Optical detection mechanism

The hot beverage preparation machine (1) comprises a water container (2) wherein water is filled, a heater (3) that enables the water inside the water container (2) to be heated, a brewing chamber (4) wherein the raw material of the beverage to be prepared is placed and whereto the water heated in the water container (2) is transferred, and wherein the brewing process is performed as a result of the interaction between the raw beverage material and water, a pot (5) with the upper surface thereof being at least partially open, that is disposed under the brewing chamber (4) and whereto the beverage brewed in the brewing chamber (4) is transferred, and a cover (9) that is disposed over the brewing chamber (4) and that provides access into the brewing chamber (4).

The hot beverage preparation machine (1) of the present invention comprises an optical detection mechanism (10) having a transmitter (6) that is disposed on the brewing chamber (4) and that emits light into the brewing chamber (4) and a receiver (7) that measures the light intensity (LI) that is reflected from the surface of the hot beverage inside the brewing chamber (4), and a control unit (8) that ends the brewing process and enables the beverage to be removed from the brewing chamber (4) and delivered into the pot (5) if the light intensity value (LIₘ), detected by the optical detection mechanism (10) is greater than a lower light intensity value (LI_{d}) predetermined by the manufacturer. The beverage material enters into reaction with the water inside the brewing chamber (4) during the brewing process and absorbs the water. The beverage material that increases in weight by absorbing water moves towards the base of the brewing chamber (4) and settles down by the effect of gravity. At the end of the brewing process the hot beverage surface roughness decreases since almost most of the beverage material has settled down. Thus, the light sent by the transmitter (6) is reflected onto the receiver (7) by being less refracted from the beverage surface and the light intensity (LI) acting on the receiver (7) increases. The control unit (8) controls the brewing process by comparing the measured light intensity (LIₘ) with a lower light intensity value (LI_{d}) predetermined by the manufacturer. By means of realizing the brewing process controllably, serving the hot beverage before it is ready or its taste getting stale is prevented.

In this embodiment, the optical detection mechanism (10) is placed such that the light emitted by the transmitter (6) is reflected from the surface of the hot beverage and reaches the receiver (7). Thus, the light waves emitted from the transmitter (6) is prevented from reaching the receiver (7) without contacting the surface of the hot beverage and the precision of data transferred from the receiver (7) to the control unit (8) is increased.

According to the present invention, the receiver (7) of the optical detection mechanism (10) is disposed on the cover (9) and detects whether or not the cover (9) is open. When measurement cannot be received from the receiver (7) or when the measurement values received are outside the light intensity interval predetermined by the manufacturer, the control unit (8) stops the brewing process. Thus, when the cover (9) is opened or forgotten in the open position, the brew quality is prevented from decreasing by preventing continuation of the brewing process. Furthermore, the field of view of the receiver (7) on the brewing chamber (4) is widened by positioning the receiver (7) on the cover (9) and measurement precision is increased.

In an embodiment of the present invention, the control unit (8) controls whether or not the brewing chamber (4) is full depending on the light intensity value (LIₘ) measured by the optical detection mechanism (10). Thus, the brewing process is prevented from being started when the brewing chamber (4) is empty.

In an embodiment of the present invention, the receiver (7) of the optical detection mechanism (10) is a photoelectric sensor or a phototransistor sensor.

In an embodiment of the present invention, the transmitter (6) of the optical detection mechanism (10) is an infrared sensor or an ultraviolet light source. Thus, the brewing process is executed without alerting the user visually by means of the transmitter (6) emitting light in the invisible wavelength.

In an embodiment of the present invention, the transmitter (6) of the optical detection mechanism (10) is a light emitting diode (LED). Thus, the light emitted inside the brewing chamber (4) during the brewing process is seen by the user and the user understands that the brewing process has started.

By means of the present invention, the brewing process is performed controllably by means of the hot beverage preparation machine (1). Thus, the beverage is prevented from being served before being ready or its taste is prevented from getting bitter or stale and consumer satisfaction is increased.

## Claims

1. A hot beverage preparation machine (1) **comprising**
- a water container (2) wherein water is filled,
- a heater (3) enabling the water inside the water container (2) to be heated,
- a brewing chamber (4) wherein the raw material of the beverage to be prepared is placed and whereto the water heated in the water container (2) is transferred, and wherein the brewing process is performed as a result of the interaction between the raw beverage material and water,
- a pot (5) with the upper surface thereof being at least partially open, that is disposed under the brewing chamber (4) and whereto the beverage brewed in the brewing chamber (4) is transferred, and
- a cover (9) that is disposed above the brewing chamber (4) and that provides access into the brewing chamber (4),
**characterized by**
- an optical detection mechanism (10) having a transmitter (6) that is disposed on the brewing chamber (4) and that emits light into the brewing chamber (4) and a receiver (7) that measures the light intensity (LI) that is reflected from the surface of the hot beverage inside the brewing chamber (4), and
- a control unit (8) that ends the brewing process and enables the beverage to be removed from the brewing chamber (4) and delivered into the pot (5) if the light intensity value (LIₘ), detected by the optical detection mechanism (10) is greater than a lower light intensity value (LI_{d}) predetermined by the manufacturer.
- the optical detection mechanism (10) having a receiver (7) that is disposed on the cover (9) and that detects whether or not the cover (9) is open.

2. A hot beverage preparation machine (1) as in Claim 1, **characterized by** the control unit (8) that controls whether or not the brewing chamber (4) is full depending on the light intensity value (LIₘ) measured by the optical detection mechanism (10).

3. A hot beverage preparation machine (1) as in any one of the above claims, **characterized by** the optical detection mechanism (10), the transmitter (6) of which is a light emitting diode (LED).

## Patentansprüche

1. Eine Heißgetränkezubereitungsmaschine (1), **besitzt**
- ein Wasserbehälter (2), in dem das Wasser befüllt wird,
- ein Heizer (3), der das Erwärmen des Wassers im Wasserbehälter (2) ermöglicht,
- eine Brühkammer (4), in der sich das Rohmaterial des zuzubereitenden Getränkes befindet und in die das im Wasserbehälter (2) erhitzte Wasser überführt wird, wobei der Brühvorgang als das Resultat der Wechselwirkung zwischen dem Rohgetränkematerial und dem Wasser durchgeführt wird,
- eine Kanne (5), dessen obere Oberfläche teilweise offen ist und unter der Brühkammer (4) angeordnet ist und in die das aus der Brühkammer (4) gebrühte Getränk überführt wird,
- einen Deckel (9), der oberhalb der Brühkammer (4) angebracht ist und den Zugang in die Brühkammer (4) ermöglicht,
**gekennzeichnet sind diese durch**
- einen optischen Erfassungsmechanismus (10) mit einem Sender (6), der an dem Brühkammer (4) angeordnet ist und einen Licht in die Brühkammer (4) strahlt und einen Empfänger (7), der die Lichtintensität (LI) misst und von der Oberfläche des Heissgetränkes in der Brühkammer (4) reflektiert.
- eine Steuereinheit (8), die den Brühvorgang beendet und es ermöglicht, dass das Getränk aus der Brühkammer (4) entnommen wird und danach in die Kanne (5) befördert wird, wenn der Lichtintensitätswert (Llm) vom optischen Erfassungsmechanismus (10) erfasst wird und diese großer als der vom Hersteller vorgegebener niedrigster Lichtintensitätswert (Lld) ist.
- einen optischen Erfassungsmechanismus (10) mit einem Empfänger (7), der an dem Deckel (9) angeordnet ist und erfasst, ob der Deckel (9) offen ist oder nicht.

2. Eine Heißgetränkezubereitungsmaschine (1), wie in Anspruch 1 aufgeführt, **ist dadurch gekennzeichnet, dass** die Steuereinheit (8) in Abhängigkeit von dem durch die optische Erfassung gemessenen Lichtintensitätswert (Llm) steht und durch den Mechanismus (10) feststellt, ob die Brühkammer (4) voll oder leer ist.

3. Eine Heißgetränkezubereitungsmaschine (1), wie in den vorher aufgeführten Ansprüchen, **ist dadurch gekennzeichnet, dass** der Erfassungsmechanismus (10) einen Sender (6) besitzt, der eine Leuchtdiode (LED) ist.

## Revendications

1. Une machine de préparation de boissons chaudes (1) **comprenant**
- un récipient d'eau (2) dans lequel de l'eau est versée,
- un dispositif de chauffage (3) permettant de chauffer l'eau à l'intérieur du réservoir d'eau (2),
- une chambre de percolation (4) dans laquelle la matière première de la boisson à préparer est placée et dans laquelle l'eau chauffée dans le récipient d'eau (2) est transférée, et dans laquelle le processus de percolation est effectué en raison de l'interaction entre la matière première de la boisson et l'eau,
- un pot (5) dont la surface supérieure est au moins partiellement ouverte, qui est disposé sous la chambre de percolation (4) et dans lequel la boisson brassée dans la chambre de percolation (4) est transférée, et
- un couvercle (9) qui est disposé au-dessus de la chambre de percolation (4) et qui donne accès à la chambre de percolation (4),
**est caractérisé en ce que**
- un mécanisme de détection optique (10) comportant un émetteur (6) est disposé sur la chambre de percolation (4) et qui émet de la lumière dans la chambre de percolation (4) et un récepteur (7) qui mesure l'intensité lumineuse (LI) est réfléchie par la surface de la boisson chaude dans la chambre de percolation (4), et
- une unité de commande (8) qui termine le processus de percolation et permet de faire sortir la boisson de la chambre de percolation (4) et de la restituer dans le pot (5) si la valeur d'intensité lumineuse (LIₘ), déterminée par le détecteur optique (10) est supérieure à une valeur inférieure (LI_{d}) prédéterminée par le fabricant.
- le mécanisme de détection optique (10) ayant un récepteur (7) qui est disposé sur le couvercle (9) et qui détecte si le couvercle (9) est ouvert ou non.

2. Une machine de préparation de boissons chaudes (1) selon la déclaration 1, **est caractérisée en ce que** l'unité de commande (8) contrôle si la chambre de percolation (4) est pleine ou non en fonction de la valeur d'intensité lumineuse (LIₘ) mesurée par le mécanisme optique de détection (10).

3. Une machine de préparation de boissons chaudes (1) comme dans l'une quelconque des déclarations ci-dessus, **est caractérisée en ce qu'il** comporte un mécanisme de détection optique (10), dont l'émetteur (6) est une diode émettrice de lumière (LED).
